# EUROPÄISCHE PATENTANMELDUNG

(11) **EP 3 144 647 A1**
(43) Veröffentlichungstag der Anmeldung: **22.03.2017**
(21) Anmeldenummer: 16400021.8
(22) Anmeldetag: 10.06.2016
(51) Int. Cl.: G01G 19/50, G01G 19/44

(54) **WAAGE MIT INFORMATIONSTRÄGER**

(30) Priorität: 17.09.2015 DE 102015012128
(71) Anmelder: seca ag, 4153 Reinach BL 1 (CH)
(72) Erfinder: Vogel, Frederik, 22301 Hamburg (DE)
(74) Vertreter: Patentanwälte Klickow & Partner Partnerschaftsgesellschaft mbB

(57) **Zusammenfassung**

Die Erfindung betrifft eine Waage mit wenigstens einem Informationsträger zur Bereitstellung von Daten in optischer, visueller oder optoelektronischer Form, wobei wenigstens ein Informationsträger im Sichtbereich wenigstens eines Elementes der Waage festlegbar ist.

## Beschreibung

Die Erfindung betrifft eine Waage mit wenigstens einem Informationsträger zur Bereitstellung von Daten in optischer, visueller oder optoelektronischer Form.

Zur Messung von Körpereigenschaften und/oder Körperfunktionen von Subjekten, z.B. menschlichen Personen oder Tieren, werden sowohl mobile als auch stationäre Messgeräte eingesetzt. Bei den zu messenden Eigenschaften oder Funktionen handelt es sich häufig um Bio- bzw. Körperimpedanzen, Herzfunktionen, Nervenfunktionen oder Elektrokardiogrammen. Weitere Messgrößen in diesem Zusammenhang können Körpergewicht, Körperzusammensetzungen, geometrische Abmessungen, Fingerabdrücke, Körpertemperaturen an verschiedenen Stellen, Zusammensetzung des verwerteten Atemgases, Atemgasvolumina, Blutdruckwerte usw. sein.

Soll nur das Körpergewicht als eine der möglichen Körpereigenschaften eines Subjektes oder eines Objektes messtechnisch erfasst werden haben sich Waagen etabliert. Waagen zur Ermittlung des Körpergewichtes eines Subjektes oder Objektes können für den privaten Bereich ausgelegt sein und werden in diesen Fällen als Haushaltswaagen bezeichnet. Waagen für den professionellen oder semiprofessionellen Einsatz in zum Beispiel Krankenhäusern, Pflegeeinrichtungen oder Arztpraxen sind ebenfalls gebräuchlich.

Insbesondere, aber nicht ausschließlich im professionellen oder semi-professionellen Einsatz sind Messgeräte zur Körpergewichtsbestimmung als eine der möglichen Körpereigenschaften eines Subjektes einzig zu diesem Zweck ausgelegt. Dazu sind der Aufbau, der Wägebereich und die Messgenauigkeit entsprechend angepasst. Im privaten Bereich sind Haushaltswaagen vielfach für verschiedene Gewichtsermittlungsaufgaben ausgelegt, beispielsweise als Personen-, Brief-, oder Küchenwaagen.

Unabhängig vom Einsatzbereich oder der Ausführungsform als mobile bzw. stationäre Messwertaufnahmevorrichtung sind Waagen in ihrem Grundaufbau häufig durch eine Basis und eine Anzeigeeinheit gebildet, wobei die Basis die notwendigen Einrichtungen zur Bestimmung eines Gewichtes beinhaltet.

Physikalisch ist das Gewicht eines Körpers seine Gewichtskraft, die infolge der Erdanziehungskraft eine ortsabhängige Erdbeschleunigung erfährt. Eine direkte Messung der Masse wäre durch Bestimmung des Volumens und der spezifischen Dichte dieses Körpers möglich. In der Regel bestimmen Waagen das Gewicht eines Körpers durch die Messung der Gewichtskraft im Rahmen einer Verformungsmessung. Diese den meisten Waagen zueigne Messmethode bestimmt den Verformungsweg einer Feder entgegen seiner näherungsweise konstanten, d.h. linearen Federkennlinie infolge einer angreifenden Gewichtskraft. Die Masse ergibt sich aus dem Quotienten von Federkonstante und Verformungsweg. Das bedeutet auch, dass für eine Gewichtsbestimmung üblicherweise mit einem Verformungsweg einer Feder oder einem anderen elastischen Objekt mit einer Federkonstante zu rechnen ist.

In modernen Waagen wird häufig wenigstens eine Wägezelle verwendet, die unter einer Aufstellfläche angeordnet ist. Die Aufstellfläche bzw. die Waagenplattform dient zur Aufnahme und Ablage des zu messenden Körpers und senkt sich bei einer Gewichtsmessung um den Betrag der Wägezellenverformung ab.

Üblicherweise sind die wenigstens eine Wägezelle, die Waagenplattform und die die weiteren Messwertaufnahmekompönenten innerhalb der Basis angeordnet bzw. von dieser umfasst oder eingehaust. Die Anzeigeeinheit kann integrativer Bestandteil der Basis sein oder als separates Bauteil ausgeführt werden und hat primär die Aufgabe, die ermittelte Messgröße - meist in optisch erfassbarer Form - anzuzeigen. Wird die Anzeigeeinheit als separates Bauteil ausgeführt, muss durch geeignete Übertragungsmittel zwischen Basis und Anzeigeeinheit sichergestellt sein, dass zumindest das anzuzeigende Messwertergebnis von der Basis an die Anzeigeeinheit übertragbar ist. Neben den bereits bewährten kabel- bzw. leitungsbasierten Methoden kommen hierfür auch Drahtlosübertragungsverbindungen in Betracht.

Sehr häufig ist es erforderlich, dass Haushalts- oder Laborwaagen mit wenigstens einem Informationsträger versehen sind. Die Informationsträger müssen je nach Anwendungs- und Einsatzbereich unterschiedliche Aufgaben erfüllen und eine, mehrere oder eine Vielzahl von Informationen, Definitionen und, oder Hinweise enthalten.

Diese Vielzahl von Informationen, Definitionen und/oder Hinweisen können unter dem Oberbegriff Daten zusarnmengefasst werden.

Der Aufgabenbereich solcher Informationsträger kann sehr vielfältig sein: Es sind Zuordnungsinformationen abbildbar bezüglich dem Einsatzort, Einsatzbereich oder der Organisationseinheit; weiter können Informations- oder Identifikationsinformationsträger erforderlich sein zur Zuordnung der jeweiligen Waage zu einer gegebenenfalls realisierten externen Anzeigeeinheit, einer Inventargruppe oder zur Kennzeichnung von Eigentums- oder Besitzverhältnissen; ebenfalls können Warnhinweise, Benutzungsanweisungen oder Handhabungsschritte per Informationsträger abgebildet werden.

Um die Handhabbarkeit und Nutzerunterstützung durch Informationsträger sicherzustellen, kann es von besonderem Vorteil sein, wenigstens einen Informationsträger im Sichtbereich der Waage vorzusehen, um die optische, visuelle oder optoelektronische und gegebenenfalls auch haptische Informationsübermittlung im Ruhezustand oder während des Messbetriebes zu unterstützen.

Häufig sind Waagen mit Typenschildern und/oder Seriennummernangaben des Herstellers ausgestattet, die jedoch keine der weiteren gegebenenfalls erforderlichen Angaben umfassen, nicht individualisierbar sind und häufig außerhalb des Sichtbereiches und an der Rückseite der jeweiligen Basis irreversibel angebracht sind.

Im Fall von Basen in Form transparenter Glas- oder Kunststoffscheiben können solche Informationsträgerauch unterseitig festgelegt sein, ohne die Sichtbarkeit wesentlich negativ zu beeinflussen.

Um beispielsweise in Arztpraxen oder in Krankenhäusern individualisierende Kennzeichnungen von Waagen durch Beschriftungen zu realisieren, werden solche Kennzeichnungen mit Hilfe von Filzstiften vorgenommen. Visuell sehen die Waagen hierdurch wenig ansprechend aus, darüber hinaus erweisen sich die Beschriftungen durch den Einfluss von Sterilisationsmitteln als wenig dauerhaft. Weiterhin ist die leichte Entfernbarkeit solcher Beschriftungen nicht geeignet, Authentizität oder Originalität zu wahren.

Es ist Aufgabe der Erfindung, einen Informationsträger für Waagen bereitzustellen, welcher die genannten Kennzeichnungsanforderungen zumindest teilweise erfüllt und die Nachteile bisheriger Lösungen reduziert.

Zu diesem Zweck schlägt die erfindungsgemäße Lehre einen Informatiönsträger vor der geeignet ist, reversibel oder irreversibel an einer Waage und innerhalb des wähtrend der Benutzung oder dem Ruhezustand verfügbaren Sichtbereiches festlegbar zu sein und wenigstens eine der genannten, möglicherweise individualisierbaren Informationen, Definitionen oder Hinweise vorzugsweise visuell, optoelektronisch oder optisch abzubilden.

Unter mechanisch befestigbar im Sinne des erfindungsgemäßen Informationsträgers wird eine wenigstens temporär nicht flüchtige Beschriftung oder Zeichenwidergabe in optischer, visueller oder optoelektronischer Weise erfassbarer Art verstanden. Die Erfindung sieht dazu beispielsweise Beschriftungen mit geeigneten Permanentfarbstoffen, Schutzabdeckungen, Schildern mit Eingravuren oder Ausstanzungen, partiellen Erhebungen, Farbanordnungen, Barcodes, direkt beschrifteten Klebefolien oder geeigneten Partikelauftrag vor.

Besonders vorteilhaft ist die Möglichkeit, Informationen, Definitionen oder Hinweise in individueller inhaltlicher Art zur Verfügung zu stellen. Dazu sieht die Erfindung vor, dass durch den Anwender, Besitzer oder Käufer einer oder einer Vielzahl von Haushalts- oder Laborwaagen der Inhalt der Informationsträger vorggebbar ist, beispielsweise bereits bei dem Bestellprozess über das Internet. Auf diese Weise kann besonders effektiv eine individualisierende bzw. individuelle Kennzeichnung in Abstimmung der jeweiligen Informationsträgeraufgabe realisiert werden.

Um die Handhabbarkeit und Nutzerunterstützung durch den erfindungsgemäßen Informationsträger sicherzustellen, ist insbesondere daran gedacht, einen Informationsträger im Sichtbereich der Haushalts- oder Laborwaage vorzusehen, um die optische, optoelektronische, visuelle oder ggf. auch haptische Informationsübermittlung im Ruhezustand oder während des Messbetriebes zu unterstützen.

Der Sichtbereich einer eine Basis umfassenden Waage ist dabei üblicherweise dessen Oberseite, die häufig gleichsam als Aufnahmefläche des zu messenden Subjektes öder Objektes dient und aus einem profilierten elastischen Material besteht. Die Erfindung sieht entweder erhaben, bündig oder in eine geeignete Vertiefung eingesetzten Informationsträger vor, der durch einen direkten Auftrag, eine Klebefolie oder ein Beschriftungsschild gebildet werden kann.

Das Beschriftungsschild kann durch Kleben, Vernieten, Verschrauben oder Einsetzen in einen in das elastische Oberflächenmaterial der Basis oder auch der Anzeigeeinheit integrierten Aufnahmerahmen festgelegt sein, wobei sowohl reversible als auch irreversible Befestigungsoptionen je nach Anforderung verwirklicht werden können. Als Beschriftungsschilder eignen sich alle verformbaren oder starren bogenförmigen Elemente oder Einsätze beispielsweise aus Kunststoff oder Metallwerkstoffen.

Die Erfindung sieht bei der Ausbildung der Informationsträger als Beschriftungsschild eine besonders für die Serienproduktion interessante Fügeverbindung vor: Die thermische Stoffschlussverbindung. Dazu wird das Beschriftungsschild auf eine Temperatur oberhalb der Schmelztemperatur des Werkstoffes, auf das die Informationsträger aufgebracht werden soll erhitzt. Die in das Beschriftungsschild eingebrachte Wärmeenergie kann mit mechanischem Druck kombiniert werden und verursacht beim Aufbringen auf die Basis oder und, oder die Anzeigeeinheit für ein lokales Aufschmelzen, die nach der Abkühlung eine stoffschlüssige Verbindung herstellt.

Je nach aufgebrachtem Fügedruck bzw. Fügeweg kann der als Beschriftungsschild ausgebildete Informationsträger auf der Fügepartneroberfläche, bündig zu dieser oder versenkt angeordnet werden. Diese Fügevariante ist besonders kostengünstig da die Basis und, oder Anzeigeeinheit als Fügepartner ohne besondere Vorarbeiten wie z.B. Herstellung eines Ausschnittes mit dem Informationsträger bestückt werden kann.

Wird ein irreversibler Informationsträger realisiert, kann der optisch, optoelektronisch oder visuell zu übermittelnde Informationsgehalt beispielsweise in Besitz- oder Eigentumsverhältnissen bestehen, auf ein Krankenhaus, eine Arztpraxis oder eine individuelle Privatperson hinweisen oder Zuordnungsinformationen hinsichtlich Krankenhausstationen enthalten. Gleiches kann auch gelten für Eichinformationen, Handlungsanweisungen, Standortspezifika hinsichtlich der Messwertgenauigkeit oder Einstellungen zur Messwerterfassung. Eine mögliche standortspezifische Information hinsichtlich der Messwertgenauigkeit kann in einer Orts- bzw. Höhenangabe liegen, da an unterschiedlichen Orten unterschiedliche Erdanziehungskräfte vorliegen und hierdurch in einem hochgenauen Messbereich eine standortspezifische Einstellung der Waage erforderlich ist.

Besonders wichtig kann eine irreversible Eigenschaft der Informationsträger sein hinsichtlich erforderlicher Reinigungsvorgänge, insbesondere die Einwirkung von Sterilisationsmittel wie beispielsweise H2O2. Sind solche Anforderungen gestellt sieht die Erfindung einen Informationsträger beispielsweise in Form eines Beschriftungsschildes mit eingravierten Informationen oder eine Schutzabdeckung der Informationsträger mit Sterilisationsmittelresistenz vor.

Reversible Informatiohsträger können sich anbieten bei temporär erforderlichen Informationsträgerinhalten, beispielsweise variable Pre-Tara-Werte oder Warnhinweise bezüglich möglicher Rutschgefahren nach einer Nassreinigung.

Weitere Anwendungsmöglichkeiten reversibler oder irreversibler Informationsträger gemäß der erfindungsgemäßen Lehre eröffnen sich bei der Ausführung von Labor-, Personen- oder Haushaltswaagen als aus separaten Elementen- bestehenden Basen und Anzeigeeinheiten mit drahtloser Messwerteübertragungseinrichtung. In diesen Fällen können Informationsträger zur Zuordnung der jeweiligen Elemente eingesetzt werden.

Um Zuordnungsfehler bei parallelem Betrieb oder Gegenwart mehr als einer Labor-, Personen- oder Haushaltswaage mit jeweils nicht in deren Basis sondern als externe Elemente ausgeführten Anzeigeeinheiten zuverlässig zu verhindern sind erfindungsgemäße Informationsträger besonders geeignet. Diese Zuordnungsaufgabe ist von besonderer Bedeutung, da andernfalls ein an sich exakt gemessener Gewichtswert mit einem oder mehrerer parallel ermittelter Messwerte vertauscht und auf diese Weise einem falschen Subjekt oder Objekt zugeordnet werden kann.

Der Informationsträger gemäß der erfindungsgemäßen Lehre kann sowohl als separate und damit einzelne Informationsträger oder auch mehrfach auf der Basis und, oder der Anzeigeeinheit vorgesehen sein. Wenigstens ein Informationsträger kann aber auch mit einem der Waageelemente oder einer gegebenenfalls vorhandenen Zusatzeinrichtung funktionell oder informativ zusammenwirken.

Beispielsweise kann ein Informationsträger mit der Anzeigeeinheit dadurch zusammenwirken, dass Inbetriebnahmeinformationen, Vorbereitungsschritte für die Messwerterfassung oder Interpretationshinweise für den jeweils angezeigten Messwert durch die Informationsträger abgebildet sind.

Eine andere Möglichkeit funktionellen Zusammenwirkens von Informationsfrägern mit Waagen eröffnet sich durch die Zusatzeinrichtung in Form einer Libelle als Bestandteil und im Sichtbereich der Basis. Libellen sind im Stand der Technik und dem Fachmann als Messinstrumente basierend auf dem Wasserwaagenprinzip bekannt. Libellen sind in der Lage, die Niveausituation in zwei Raumrichtungen und damit eine Ebene aufspannende Fläche zu bestimmen dadurch, dass die Lage einer Luftblase in einem kugelkalottenförmigen und mit Flüssigkeit gefüllten Körper anhand einer Referenzmarkierung ausgerichtet wird, die das Nullniveau und damit die waagerechte Lage der aufgespannten Fläche repräsentiert.

Das üblicherweise bei Waagen dieser Gattung angewendete Messprinzip der Verformungsmessung von in Wägezellen innerhalb der Basis angeordneten Federelementen erfordert eine rechtwinkelige Ausrichtung des zu messenden Subjekte oder. Objektes zur Aufnahmefläche, die durch eine Ausrichtung dieser Aufnahmefläche auf Nullniveau erreicht werden kann. Diese Ausrichtung wird häufig durch höhenverstellbare Standfüße der Basis realisiert, deren korrekte Einstellung mittels der Libelle zur Messung des Lagehiveaus überprüft wird. Entsprechende Handlungs- und Einstellungsoptionen können in unmittelbarer Nachbarschaft zu dem LibellenMessinstrument Bestandteil der Basis sein und durch die erfindungsgemäßen Informationsträger bereitgestellt werden.

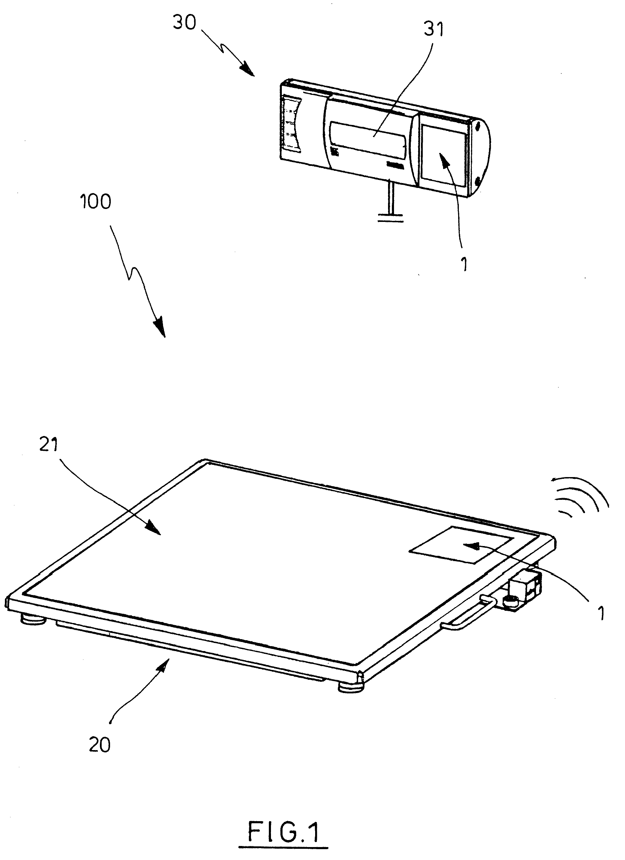

Die Erfindung wird nachfolgend mit Bezug auf die Figuren erläutert. Im Einzelnen zeigen
- Figur 1:: ein erstes Ausführungsbeispiel der erfindungsgemäßen Informationsträger (1) am Beispiel einer Labor-, Personen- oder Haushaltswaage (100) in einer Ausführung bestehend aus im Wesentlichen zwei separaten Elementen, einer Basis (20) und einer Anzeigeeinheit (30) mit drahtloser Informationsübertragung zwischen der Basis (20) und der Anzeigeeinheit (30),

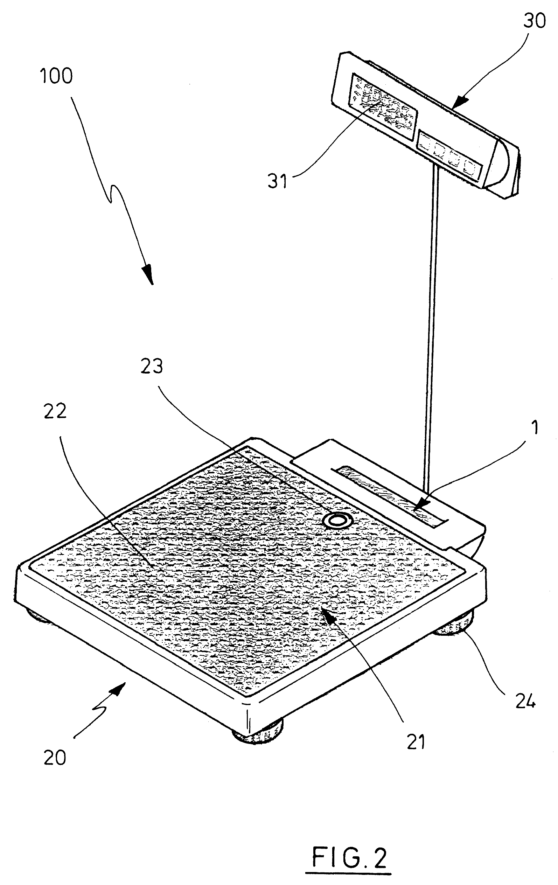

- Figur 2:: ein zweites Ausführungsbeispiel der erfindungsgemäßen Informationsträger (1) am Beispiel einer Labor-, Personen- oder Haushaltswaage (100) in einer Ausführung bestehend aus im Wesentlichen zwei Elementen, einer Basis (20) und einer Anzeigeeinheit (30) mit drahtgebundener Informationsübertragung zwischen der Basis (20) und der Anzeigeeinheit (30) sowie Einrichtungen (23, 24) zur Nivellierung der Basis (20) in eine waagerechte Lage,

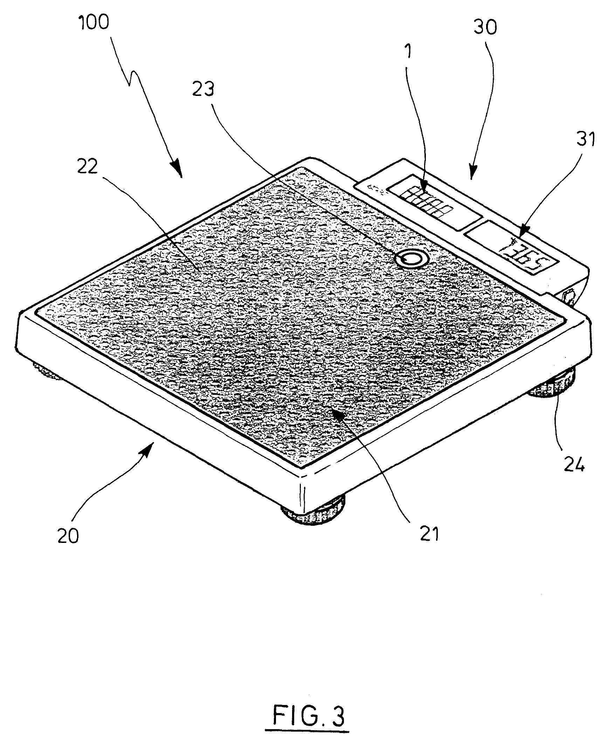

- Figur 3:: ein weiteres Ausführungsbeispiel der erfindungsgemäßen Informationsträger (1) am Beispiel einer Labor-, Personen- oder Haushaltswaage (100) in einer Ausführung bestehend aus im Wesentlichen zwei Elementen, einer Basis (20) und einer Anzeigeeinheit (30) ausgeführt als integrale Baueinheit und Einrichtungen (23, 24) zur Nivellierung der Basis (20) in eine waagerechte Lage,

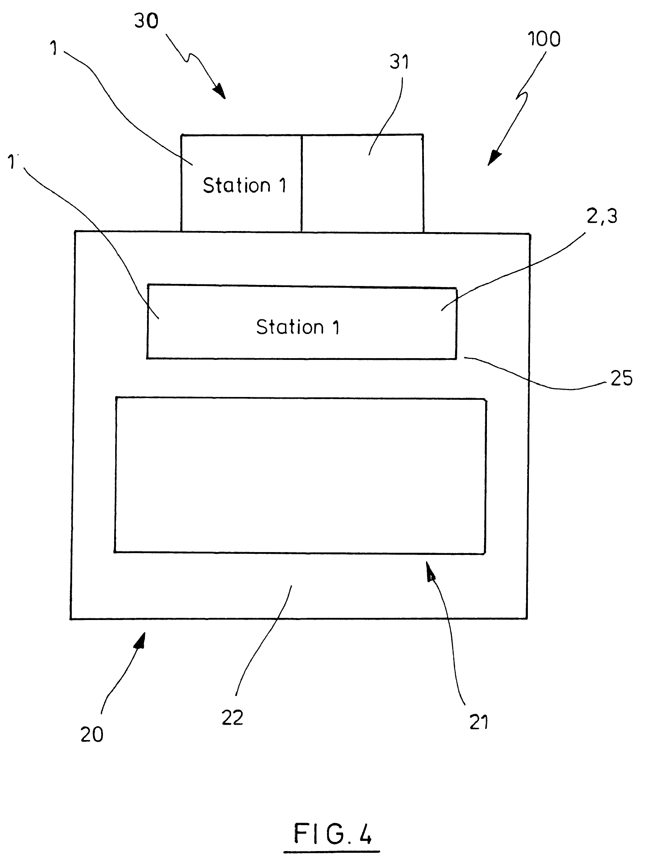

- Figur 4:: ein Ausführungsbeispiel der erfindungsgemäßen Informationsträger (1) am Beispiel einer Labor-, Personen- oder Haushaltswaage (100) in einer Ausführung bestehend aus im Wesentlichen zwei Elementen, einer Basis (20) und einer Anzeigeeinheit (30) ausgeführt als integrale Baueinheit,

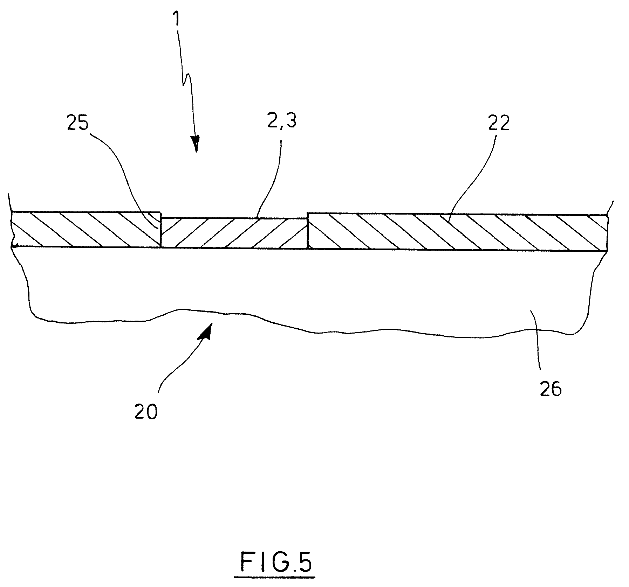

- Figur 5:: das Ausführungsbeispiel gemäß Figur 4 in einer vereinfachten Schnittdarstellung.

Figur 1 zeigt ein erstes Ausführungsbeispiel der erfindungsgemäßen Informationsträger (1) am Beispiel einer Labor-, Personen- oder Haushaltswaage (100) in einer Ausführung bestehend aus im Wesentlichen zwei separaten Elementen, einer Basis (20) und einer Anzeigeeinheit (30) mit drahtloser Informationsübertragung zwischen der Basis (20) und der Anzeigeeinheit (30). Um die Zuordnung der beiden Elemente (20, 30) der Labor-, Personen- oder Haushaltswaage (100) zuverlässig sicherzustellen auch bei der Anwesenheit mehrerer solcher Waagen ist daran gedacht, die Informationsträger (1) mit geeigneten Zuordnungsinformationen in nichtflüchtiger, bevorzugt irreversibler und mechanischer Weise sowohl an der Basis (20) als auch an der Anzeigeeinheit (30).

Um die Zuordnungsinformation der Informationsträger (1) auch während des Messvorganges vorzugsweise visuell, optisch oder optoelektronisch aufnehmen bzw. vergleichen zu können ist der Informationsträger (1) sowohl an der Basis (20) als auch an der Anzeigeeinheit (30) im Sichtbereich vorgesehen. Sichtbereich in diesem Zusammenhang bedeutet die visuelle, optische oder optoelektronische Zugänglichkeit der Informationsträgersinformationen.

Im Fall der Anzeigeeinheit (30) bedeutet dies, dass der Informationsträger (1) entweder gleichseitig der Messwertanzeige (31) oder zumindest richtungsvergleichbar angeordnet und einer Bedienperson, dem Messsubjekt oder einer optoelektronischen Erfassungseinheit zugewandt ist.

Im Fall der Basis (20) bedeutet dies, dass die Informationsträger (1) vorzugsweise auf der Basisoberseite (21) derart angeordnet ist, dass eine Verdeckung des zu messenden Subjektes oder Objektes nicht erfolgt.

Der jeweiligen Informationsträger (1) an der Basis (1) oder, und der Anzeigeeinheit (30) kann verschiedener erfindungsgemäßer Ausgestaltung sein - realisiert werden kann der jeweilige Informationsträger (1) mit geeigneten Permanentfarbstoffen und gegebenenfalls mit Schutzabdeckungen gegen mechanische, chemische oder beliebige anderer Belastungen, Schildern mit Eingravuren oder Ausstanzungen, partiellen Erhebungen, Farbanordnungen, Barcodes, direkt beschrifteten Klebefolien oder geeignetem Partikelauftrag.

Figur 2 illustriert in perspektivischer Ansicht ein zweites Ausführungsbeispiel der erfindungsgemäßen Informationsträger (1) am Beispiel einer Labor-, Personen- oder Haushaltswaage (100) in einer Ausführung bestehend aus im Wesentlichen zwei Elementen, einer Basis (20) und einer Anzeigeeinheit (30) mit drahtgebundener Informationsübertragung zwischen der Basis (20) und der Anzeigeeinheit (30) sowie Einrichtungen (23, 24) zur Nivellierung der Basis (20) in eine waagerechte Lage. Der Informationsträger (1) ist in diesem Ausführungsbeispiel an einer kopfseitig der Basis (20) vorgesehenen Fläche im Sichtbereich angebracht und kann insbesondere Handlungsanweisungen zur Basisnivellierung durch die höhenverstellbaren Füße (24) aufweisen, dessen korrekte, d.h. waagerechte Lage durch die an der Basisoberseite (21) und in die Auflagematte (22) eingebrachte Libelle (23) angezeigt wird. Auf diese Weise wirkt wenigstens ein Informationsträger (1) mit der Libelle (23) als ein Waagenelement funktionell und informativ zusammen.

Zusätzlich oder alternativ können weitere Informationen oder Warnhinweise Inhalt der Informationsträger (1) sein, beispielsweise Reinigungshinweise, Warnhihweise, Pre-Tarawerte, Inbetriebnahmeinformationen, Eigentums- und, oder Besitzkennzeichnungen usw.

Figur 3 bildet ein weiteres Ausführungsbeispiel der erfindungsgemäßen Informationsträger (1) am Beispiel einer Labor-, Personen- oder Haushaltswaage (100) in einer Ausführung bestehend aus im Wesentlichen zwei Elementen, einer Basis (20) und einer Anzeigeeinheit (30) ausgeführt als integrale Baueinheit und Einrichtungen (23, 24) zur Nivellierung der Basis (20) in eine waagerechte Lage ab. Dieses Ausführungsbeispiel zeigt den Informationsträger (1) angebracht im Sichtbereich an einer kopfseitig der Basis (20) vorgesehenen Fläche und in unmittelbarer Nachbarschaft sowohl zu der Messwertanzeige (31) als auch dem Messinstrument in Form einer Libelle (23).

Figur 4 illustriert anhand einer stark vereinfachten Strichdarstellung ein Ausführungsbeispiel der erfindungsgemäßen Informationsträger (1) am Beispiel einer Labor-, Personen- oder Haushaltswaage (100) in einer Ausführung bestehend aus im Wesentlichen zwei Elementen, einer Basis (20) und einer Anzeigeeinheit (30) ausgeführt als integrale Baueinheit. Der erfindungsgemäße Informationsträger (1) ist hier in einer Vertiefung (25), d.h. einer Ausnehmung innerhalb der Auflagematte (22) an der Basisoberseite (21) im Sichtbereich angeordnet und als Einlegeteil (3) gestaltet.

Das Einlegeteil (3) kann durch ein Beschriftungsschild (2) gebildet sein und optional eine Schutzabdeckung aufweisen (nicht dargestellt). Die Vertiefung (25) innerhalb der Auflagematte (22) an der Basisoberseite (21) ist vorzugsweise im zur Anzeigeeinheit (30) angrenzenden ersten Drittel der Standfläche (21) angeordnet, um auch bei der Messwertaufnahme und aufgenommenem Subjekt oder Objekt im Sichtbereich zu liegen. Durch die vorzugsweise Anordnung im ersten Drittel der Standfläche wird ein Verdecken der Informationsträger (1) durch das zu messende Subjekt oder Objekt vermieden.

Weiterhin zeigt Figur 4 einen optionalen, ggf. additiven oder alternativen Informationsträger (1) im Sichtbereich der Anzeigeeinheit (30). Ein erster und ein weiterer- Informationsträger (1) können insbesondere dann von Vorteil sein, wenn sowohl reversible als auch irreversible Informationen, Hinweise oder Handlungsanweisungen visuell, optisch und, oder optoelektronisch bereitgestellt werden müssen - beispielsweise eine irreversible Standortinformation und ein reversibel, nur temporär zutreffender Pre-Tarawert.

Figur 5 zeigt das Ausführungsbeispiel gemäß Figur 4 in einer vereinfachten Schnittdarstellung. Gezeigt wird der erfindungsgemäße Informationsträger (1) in einer versenkten Ausführungsform in der Vertiefung (25) innerhalb der Auflagematte (22) an der Basisoberseite (21). Der als Einlegeteil (3) bzw. Beschriftungsschild (2) ausgeführte Informationsträger (1) kann wie dargestellt versenkt angeordnet werden oder je nach deren Wanddicke relativ oder absolut zur Auflagematte (22) bündig oder auch erhaben sein.

Der Informationsträger (1) kann beispielsweise in die zuvor hergestellten Ausnehmung (25) eingesetzt und durch Kleben festgelegt werden. Der Klebeprozess kann dabei entweder zum Basiskorpus (26) hin oder zu den Stirnflächen der Ausnehmung (25) oder zu beiden erfolgen.

Als alternatives Fügeverfahren sieht die Erfindung die thermische Stoffschlussverbindung vor. Dazu wird das Beschriftungsschild (2) auf eine Temperatur oberhalb der Schmelztemperatur des Werkstoffes der Auflagematte (22) und ggf. auch des Basiskorpus (26) erhitzt und anschließend unter Einwirkung von mechanischem Druck in die Auflagematte (22) und/oder den Basiskorpus (26) eingepresst. Durch das lokale Aufschmelzen und anschließende Abkühlung der Werkstoffe der Auflagematte (22) und/oder des Basiskorpus (26) bildet sich eine stoffschlüssige Verbindung aus und gleichzeitig wird die Ausnehmung (25) durch die Verdrängung aufgeschmolzenen Werkstoffes gebildet. Auf diese Weise wird nicht nur der vorbereitende Herstellungsschritt zur Realisierung der Ausnehmung (25) eingespart, sondern es kann der Informationsträger (1) beispielsweise nach Kundenwunsch sehr flexibel positioniert werden.

## Patentansprüche

1. Waage (100) mit wenigstens einem Informationsträger (1) zur Bereitstellung von Daten, wobei wenigstens ein Informationsträger (1) die optische, visuelle oder optoelektronische Erfassung der bereitgestellten Daten unterstützt, **dadurch gekennzeichnet, dass** wenigstens ein Informationsträger (1) im Sichtbereich wenigstens eines Elementes (20, 30) der Waage (100) festlegbar ist.

2. Waage (100) nach Anspruch 1, **dadurch gekennzeichnet, dass** der wenigstens eine Informationsträger (1) derart im Sichtbereich an wenigstens einem Element (20, 30) der Labor-, Haushalts- oder Personenwaage (100) festlegbar ist das die optische, visuelle oder optoelektronische Erfassung der bereitgestellten Daten vor und, oder während der Messwertaufnahme unterstützt ist.

3. Waage (100) nach Anspruch 1, **dadurch gekennzeichnet, dass** der wenigstens eine Informationsträger (1) im Sichtbereich an der Basis (20) im Bereich der Standfläche (21) festlegbar ist.

4. Waage (100) nach Anspruch 1, **dadurch gekennzeichnet, dass** der wenigstens eine Informationsträger (1) im Sichtbereich an der Basis (20) im Bereich der Auflagematte (22) festlegbar ist.

5. Waage (100) nach Anspruch 1, **dadurch gekennzeichnet, dass** der wenigstens eine Informationsträger (1) im Sichtbereich an der Basis (20) im Bereich des Basiskorpus (26) festlegbar ist.

6. Waage (100) nach Anspruch 1, **dadurch gekennzeichnet, dass** der wenigstens eine Informationsträger (1) im Sichtbereich an der Basis (20) in eine Ausnehmung (25) festlegbar ist.

7. Waage (100) nach Anspruch 1, **dadurch gekennzeichnet, dass** der wenigstens eine Informationsträger (1) im Sichtbereich an der Anzeigeeinheit (30) festlegbar ist.

8. Waage (100) nach einem der vorgehenden Ansprüche, **dadurch gekennzeichnet, dass** der wenigstens eine Informationsträger (1) erhaben, bündig oder versenkt festlegbar ist.

9. Waage (100) nach Anspruch 1, **dadurch gekennzeichnet, dass** der wenigstens eine Informationsträger (1) durch ein bogenförmiges Schild (2) gebildet ist.

10. Waage (100) nach Anspruch 1, **dadurch gekennzeichnet, dass** der wenigstens eine Informationsträger (1) durch eine Klebefolie gebildet ist.

11. Waage (100) nach Anspruch 1, **dadurch gekennzeichnet, dass** der wenigstens eine Informationsträger (1) als Einlegeteil ((3) ausgebildet ist.

12. Waage (100) nach Anspruch 1, **dadurch gekennzeichnet, dass** der wenigstens eine Informationsträger (1) durch ein thermisches Fügeverfahren oder ein Vernieten oder ein Verkleben oder ein Verschrauben im Sichtbereich wenigstens eines Elementes (20, 30) der Labor-, Haushalts- oder Personenwaage (100) festlegbar ist.

13. Waage (100) nach Anspruch 1, **dadurch gekennzeichnet, dass** die Daten des wenigstens einen Informationsträgers (1) Informationen bezüglich Inbetriebnahme und, oder Handlungsanweisungen zur Messwerterfassung und, oder Benutzungsinformationen umfasst.

14. Waage (100) nach Anspruch 1, **dadurch gekennzeichnet, dass** die Daten des wenigstens einen Informationsträgers (1) Definitionen bezüglich Pre-Tarawerten, Nulllagenwerten oder voreingestellten Messgenauigkeitswerten umfasst.

15. Waage (100) nach Anspruch 1, **dadurch gekennzeichnet, dass** die Daten des wenigstens einen Informationsträgers (1) Hinweise bezüglich Handlungsanweisungen für ein Messinstrument (23) umfasst, sodass die wenigstens eine Informationsträger (1) mit dem Messinstrument (23) funktionell zusammenwi rkt.

16. Waage (100) nach Anspruch 1, **dadurch gekennzeichnet, dass** die Daten des wenigstens einen Informationsträgers (1) Hinweise bezüglich einem zugewiesenen Standort, einer zugewiesenen Organisationseinheit, Besitz- oder Eigentumsverhältnissen umfasst.

17. Waage (100) nach Anspruch 1, **dadurch gekennzeichnet, dass** die Daten des wenigstens einen Informationsträgers (1) durch einen Barcode gebildet sind.

18. Waage (100) nach Anspruch 1, **dadurch gekennzeichnet, dass** die Daten des wenigstens einen Informationsträgers (1) beständig gegenüber Reinigungsmitteln und, oder Sterilisationsmitteln sind.

19. Waage (100) nach Anspruch 1, **dadurch gekennzeichnet, dass** die Daten des wenigstens einen Informationsträgers (1) durch eine Schutzabdeckung vor Umwelteinflüssen und, oder Reinigungsmitteln und, oder Sterilisationsmitteln geschützt sind.

20. Waage (100) nach Anspruch 1, **dadurch gekennzeichnet, dass** der wenigstens eine Informationsträger (1) und/oder die optisch, visuell oder optoelektronisch erfassbaren Daten reversibel oder irreversibel festgelegt sind.

21. Waage (100) nach Anspruch 1, **dadurch gekennzeichnet, dass** die Daten individuell vom Benutzer oder Käufer definierbar sind.
